# EUROPÄISCHE PATENTSCHRIFT

(11) **EP 1 114 303 B1**
(45) Veröffentlichungstag und Bekanntmachung des Hinweises auf die Patenterteilung: **02.01.2004**
(21) Anmeldenummer: 99946032.2
(22) Anmeldetag: 26.08.1999
(51) Int. Cl.: G01K 13/00, G01J 5/08

(54) **STRAHLUNGSTHERMOMETER UND STRAHLUNGSSENSOR MIT MEHREREN SENSORELEMENTEN SOWIE VERFAHREN ZUR TEMPERATURBESTIMMUNG**
RADIATION THERMOMETER AND RADIATION SENSOR WITH SEVERAL SENSOR ELEMENTS, METHOD FOR DETERMINING TEMPERATURE
THERMOMETRE A RAYONNEMENT ET DETECTEUR DE RAYONNEMENT PRESENTANT PLUSIEURS ELEMENTS DE DETECTION, ET PROCEDE DE DETERMINATION D'UNE TEMPERATURE

(30) Priorität: 16.09.1998 DE 19842403
(43) Veröffentlichungstag der Anmeldung: 11.07.2001
(73) Patentinhaber: Braun GmbH, 61476 Kronberg (DE)
(72) Erfinder: JANOTTE, Michael, D-61476 Kronberg (DE)
(86) Internationale Anmeldenummer: PCT/EP1999/006266
(87) Internationale Veröffentlichungsnummer: WO 2000/016050

(56) Entgegenhaltungen:
- EP-A- 0 566 156
- DE-A- 3 633 199
- GB-A- 2 319 336
- US-A- 5 631 467
- US-A- 5 701 008
- PATENT ABSTRACTS OF JAPAN vol. 1997, no. 07, 31. Juli 1997 (1997-07-31) -& JP 09 084768 A (TERUMO CORP), 31. März 1997 (1997-03-31)
- PATENT ABSTRACTS OF JAPAN vol. 016, no. 070 (P-1315), 20. Februar 1992 (1992-02-20) -& JP 03 263001 A (TERUMO CORP), 22. November 1991 (1991-11-22) in der Anmeldung erwähnt
- PATENT ABSTRACTS OF JAPAN vol. 017, no. 178 (E-1347), 7. April 1993 (1993-04-07) -& JP 04 333292 A (NEC CORP), 20. November 1992 (1992-11-20) in der Anmeldung erwähnt
- PATENT ABSTRACTS OF JAPAN vol. 006, no. 245 (P-159), 3. Dezember 1982 (1982-12-03) -& JP 57 142526 A (FUJITSU KK), 3. September 1982 (1982-09-03) in der Anmeldung erwähnt
- PATENT ABSTRACTS OF JAPAN vol. 013, no. 245 (P-881), 8. Juni 1989 (1989-06-08) -& JP 01 047923 A (MATSUSHITA ELECTRIC IND CO LTD), 22. Februar 1989 (1989-02-22) in der Anmeldung erwähnt

## Beschreibung

Die Erfindung betrifft ein Strahlungsthermometer und einen Strahlungssensor mit mehreren Sensorelementen zur Detektion von Infrarot-Strahlung aus voneinander verschiedenen Raumbereichen, sowie ein Verfahren zur Bestimmung einer Temperatur mittels eines derartigen Strahlungsthermometers bzw. Strahlungssensors.

Es sind Strahlungsthermometer mit nur einem einzigen Infrarot-Sensorelement bekannt, das am Ende eines Lichtleiters angeordnet ist. Der Lichtleiter sorgt dafür, daß nur Strahlung aus einem bestimmten Raumwinkelbereich auf das Sensorelement trifft. So ist beispielsweise die Meßspitze eines Infrarot-Thermometers zur Fiebermessung im Ohr so dimensioniert, daß das Sensorelement nur ein Gesichtsfeld von der ungefähren Größe des Trommelfells hat. Allerdings liegen meistens im Gesichtsfeld des Sensorelements Teile sowohl des Trommelfells als auch des Ohrkanals, die unterschiedliche Temperaturen aufweisen. Daher wird im allgemeinen nicht die Trommelfelltemperatur gemessen, die als das beste Maß für die Körperkerntemperatur gilt, sondern immer nur ein Zwischenwert, der zwischen der Trommelfell- und der Ohrkanaltemperatur liegt. Somit hängt die Genauigkeit einer Temperaturmessung von der Plazierung der Meßspitze im Ohrkanal ab, d.h. vom ihrem Abstand zum Trommelfell und vom Winkel, den sie mit dem Ohrkanal bildet.

Aus der WO 95/14813 ist ein Ohrthermometer bekannt, bei dem am Ende eines Lichtleiters mehrere Sensorelemente so angeordnet sind, daß sie Strahlung aus unterschiedlichen Raumwinkelbereichen aufnehmen. Durch entsprechende Auswertung der von den Sensorelementen gelieferten Signale läßt sich zwar ein Temperaturmeßwert erhalten, der von der Plazierung der Meßspitze im Ohr relativ unabhängig ist, jedoch ebenfalls einen Zwischenwert darstellt, der nicht der Trommelfelltemperatur entspricht.

Die herkömmlichen Infrarot-Ohrthermometer besitzen ferner den Nachteil, daß der üblicherweise verwendete Lichtleiter, ein innen vergoldetes Röhrchen von etwa 3 mm Durchmesser, sehr teuer ist und außerdem während einer Fiebermessung Wärme vom Ohr ins Innere der Meßspitze leitet. Es sind daher aufwendige Maßnahmen erforderlich, damit dadurch die Messung nicht verfälscht wird.

Aus der EP 0566156 B1 ist ein Infrarotsensor mit zwei infrarotempfindlichen Elementen bekannt, von denen das eine gegen Infrarotstrahlung abgeschirmt ist, der zur Verwendung in einem Thermometer zur Messung der Körpertemperatur vorgesehen ist, sowie ein Verfahren zu dessen Herstellung. Durch Vergleich der von den beiden Elementen gelieferten Signale läßt sich ein Meßsignal erhalten, das der Menge der auftreffenden Infrarotstrahlung entspricht und weitgehend frei von elektrischem Rauschen und thermischen Störungen ist. Die infrarotempfindlichen Elemente sind auf ihrer Ober- und Unterseite durch Deckelschichten geschützt.

Aus der JP-A-03-263001 ist ein Infrarot-Sensor mit einer Mikrolinse bekannt, der zur Verwendung in einem Ohr-Thermometer zur Fiebermessung vorgesehen ist, sowie ein Verfahren zu dessen Herstellung. Die Mikrolinse dient zur Fokussierung der Infrarotstrahlung auf den Infrarotsensor. Sie hat einen Durchmesser von etwa 1,44 mm.

Die Herstellung der bekannten Infrarotsensoren erfolgt mit den von der Halbleiterherstellung bekannten Verfahren, bei denen eine Vielzahl von Sensorelementen auf einem Substrat gebildet werden, das anschließend in einzelne Sensoren mit jeweils nur einem Element zerschnitten wird, die dann mit je einem Gehäuse etc. versehen werden.

Aus der JP-A-03-248477 ist ein Infrarotsensor mit vier identischen infrarotempfindlichen Elementen bekannt, der zur Verwendung in einem Ohr-Thermometer zur Fiebermessung vorgesehen ist, sowie ein Verfahren zu dessen Herstellung. Die vier Elemente sind auf Brücken angeordnet, die sich über eine Vertiefung in einem Substrat erstrecken.

Aus der JP-A-04-333292 ist eine zweidimensionale Anordnung von Thermoelementen bekannt, die für einen Infrarot-Bildsensor gedacht ist.

Aus "Uncooled IR Focal Plane Arrays" von Paul W. Kruse, SPIE, vol. 2552, S. 556 - 563 sind Sensorarrays, d.h. zweidimensionale Anordnungen von Infrarot-Sensorelementen bekannt, bei denen die Länge bzw. Breite eines Sensorelements weniger als 0,1 mm beträgt.

Es ist Aufgabe der Erfindung, ein einfach aufgebautes Strahlungsthermometer sowie einen Strahlungssensor und ein Temperaturberechnungsverfahren für ein Strahlungsthermometer anzugeben, mit dem selektiv die Temperatur von Objekten meßbar ist, die nur einen Teil des Gesichtsfelds des Strahtungsthermometers ausfüllen.

Die Lösung dieser Aufgabe gelingt mit einem Strahlungsthermometer, das einen Strahlungssensor mit mehreren Infrarot-Sensorelementen und mehreren optischen Elementen aufweist, wobei ein einzelnes optisches Element entweder nur einem Sensorelement oder einer aus mehreren Sensorelementen bestehenden Sensorgruppe zugeordnet ist. Die optischen Elemente sorgen dafür, daß die Sensorelemente oder Sensorgruppen nur Strahlung aus einem eng begrenzten Raumbereich aufnehmen können. Auf diese Weise ist das Gesichtsfeld des Strahlungsthermometers in eine Mehrzahl von Teilgesichtsfelder unterteilt, deren Temperaturen einzeln gemessen werden können. Für die Zwecke eines Ohrthermometers ist eine gewisse Überlappung der einzelnen Teilgesichtsfelder tolerierbar.

Vorteilhaft für die Verwendung in einem Ohrthermometer ist ein Infrarot-Mehrfachsensor, d.h. eine Anordnung von mehreren Sensorelementen, die sich auf einem gemeinsamen Substrat befinden, da sich mit einem derartigen Mehrfachsensor eine hinreichend kleine Thermometer-Meßspitze realisieren läßt. Die optischen Elemente sind vorzugsweise miteinander zu einem einzigen optischen Bauteil verbunden (Mehrfachoptik), und bilden vorteilhafterweise ein integriert optisches Bauelement. Eine besonders vorteilhafte Ausführung eines erfindungsgemäßen Strahlungssensors weist einen Mehrfachsensor und eine Mehrfachoptik auf, die nahe oder auf der Oberfläche des Mehrfachsensors angeordnet ist. Derartige Strahlungssensoren sind beispielsweise aus der US-A-5,701,008, JP-A-57-142526, JP-A-1-47923 und DE 36 33 199 A1 bekannt.

Vorzugsweise sind die optischen Elemente und die Sensorelemente jedoch als integrierter elektrooptischer Temperatursensor ausgebildet, bei dem die optischen Elemente beispielsweise direkt auf der Oberfläche des Mehrfachsensors ausgebildet sind. Die Herstellung eines derartigen Temperatursensors kann mit den von der Halbleiterherstellung bekannten Verfahren erfolgen. Ein elektrooptischer Infrarotsensor, bei dem die einzelnen Sensorelemente aus wärmeempfindlichen Kondensatoren bestehen, ist aus der US-A-5,631,467 bekannt.

Ein erfindungsgemäßes Verfahren zur Temperaturbestimmung mittels eines Strahlungsthermometers, beispielsweise eines Ohrthermometers, das einen Strahlungssensor mit mehreren Sensorelementen aufweist, ermöglicht insbesondere auch eine Fiebermessung im Ohr, d.h. die Messung der Trommelfelltemperatur, obwohl im Gesichtsfeld des Strahlungsthermometers sowohl Teile des Trommelfells als auch des Ohrkanals liegen. In einem solchen Fall werden nämlich die Sensorelemente, die das Trommelfell sehen, eine höhere Temperatur detektieren, als die restlichen Sensorelemente, die den Ohrkanal sehen. Ausgewertet werden erfindungsgemäß nur die Temperatursignale von den Sensorelementen, die größere oder signifikant größere, oder bei anderen Anwendungsfällen kleinere oder signifikant kleinere, Temperaturen detektieren als die restlichen.

Bei einem besonders vorteilhaften Verfahren wird vor der Temperaturbestimmung zuerst geprüft, ob die Meßspitze des Thermometers im Ohrkanal richtig ausgerichtet ist. Bei nicht richtiger Ausrichtung, d.h. wenn sich das Trommelfell nicht im Gesichtsfeld des Strahlungssensors befindet sondern die Meßspitze ausschließlich auf Teile des Ohrkanals gerichtet ist, werden nämlich alle Sensorelemente weitgehend dieselben Temperaturwerte liefern. Wenn bei der Auswertung der Temperatursignale also kein hinreichend deutlicher Temperaturgradient innerhalb des Gesichtsfeld des Strahlungssensors erkennbar ist, liefert das erfindungsgemäße Verfahren keinen Temperaturmeßwert sondern eine entsprechende Fehlermeldung bzw. Aufforderung, die Messung zu wiederholen. Das Gesichtsfeld des Strahlungssensors muß bei dieser Ausführung eines erfindungsgemäßen Thermometers größer sein als der Durchmesser des Trommelfells, damit auch bei direkter Ausrichtung der Meßspitze aufs Trommelfell der umgebende Ohrkanal mit erfaßt, und somit auch in diesem Fall der Temperaturgradient zwischen Trommelfell und Ohrkanal erkennbar wird.

Ein nach dem erfindungsgemäßen Verfahren arbeitendes Fieberthermometer hat den Vorteil einer sehr guten Reproduzierbarkeit der Messungen, da die gemessenen Temperaturen weitestgehend unabhängig von der jeweiligen Plazierung einer Meßspitze im Ohr sind. Vom Prinzip her muß bei jeder Messung nämlich immer nur ein einziger oder einige wenige von beispielsweise insgesamt hundert Sensorelementen das Trommelfell sehen, um die Trommetfelltemperatur, d.h. ggfs. das Fieber genau messen zu können.

Ferner vereinfacht sich der Aufbau eines erfindungsgemäßen Strahlungsthermometers bei Verwendung eines erfindungsgemäßen Strahlungssensors, weil als Lichtleiter nicht wie sonst üblich ein innen vergoldetes Metallrohr benötigt wird, denn dessen Funktion wird von den optischen Elementen wahrgenommen. Daher ergeben sich mehr Möglichkeiten bei der Gestaltung der Meßspitze eines erfindungsgemäßen Strahlungsthermometers, da der Strahlungssensor beispielsweise auch unmittelbar am Ende der Meßspitze angeordnet sein kann. Auch können am Ende der Meßspitze mehrere gegeneinander geneigt angeordnete Strahlungssensoren vorhanden sein, um ein ausreichend großes Blickfeld zu erhalten.

Die Erfindung wird nachstehend anhand von Ausführungsbeispielen erläutert, die in den Figuren dargestellt sind. Weitere Ausgestaltungen sind in der Beschreibung beschrieben.
Es zeigen:
- Fig. 1: einen Ausschnitt aus einem ersten erfindungsgemäßen Temperatursensor;
- Fig. 2: eine Draufsicht und einen Querschnitt durch einen Ausschnitt aus einem zweiten erfindungsgemäßen Temperatursensor;
- Fig. 3: eine Draufsicht und einen Querschnitt durch einen Ausschnitt aus einem dritten erfindungsgemäßen Strahlungssensor;
- Fig. 4: schematisch ein erfindungsgemäßes Strahlungsthermometer;
- Fig. 5: ein Ablaufdiagramm eines erfindungsgemäßen Verfahrens zur Temperatur-bestimmung.

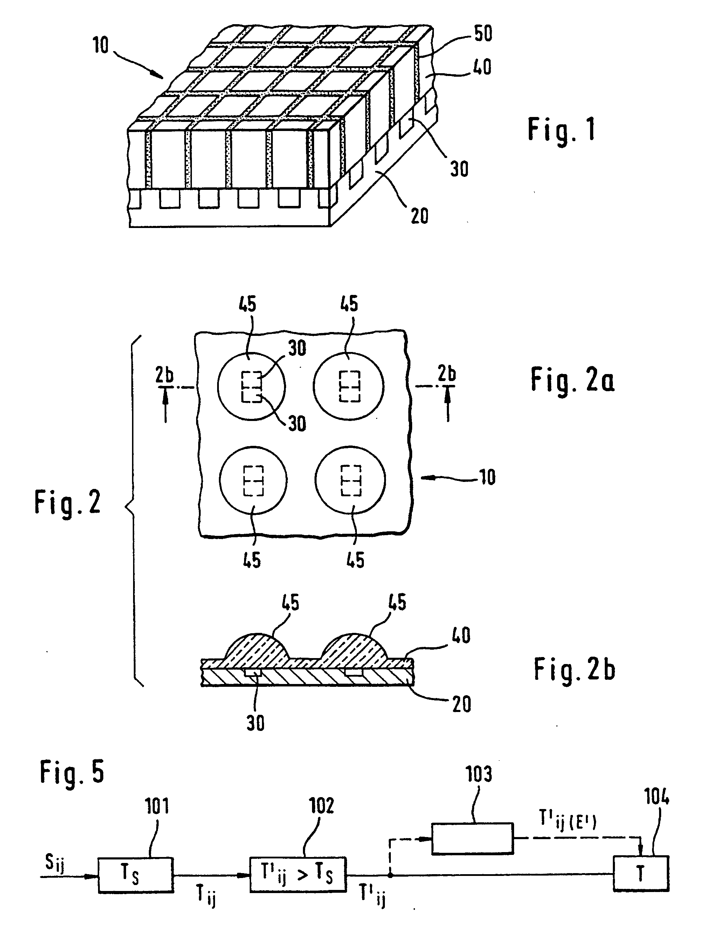

Ein Ausschnitt aus einem ersten erfindungsgemäßen Temperatursensor 10 ist in Fig. 1 schematisch dargestellt. Er basiert auf einem an sich bekannten Sensorarray, bei dem auf einem Substrat 20 eine Mehrzahl von Sensorelementen 30 raster- oder matrixförmig angeordnet ist. Die Größe der einzelnen Sensorelemente beträgt beispielsweise nur 0,1 x 0,1 mm, und die Breite der Zwischenräume zwischen benachbarten Sensorelementen liegt beispielsweise in derselben Größenordnung. Über dem Sensorarray befindet sich eine für Infrarotlicht durchlässige Schicht 40 mit einer ebenen Oberfläche, in der senkrecht zur Oberfläche in regelmäßigen Abständen eine Mehrzahl sich kreuzender Gräben 50 ausgebildet ist, die über den Zwischenräumen verlaufen. Somit befindet sich über jedem Sensorelement 30 jeweils ein quaderförmiger Lichtleiter, der durch einen seitlich durch Gräben 50 begrenzten Teil der Schicht 40 gebildet ist, und dessen Länge der Dicke der Schicht entspricht. Die Gräben können mit einem Infrarotlicht reflektierenden Material, beispielsweise Gold, gefüllt sein. Besonders vorteilhaft ist es, wenn die Gräben nur bis zu einer bestimmten Höhe bzw. Tiefe mit einem Infrarotlicht reflektierenden Material gefüllt sind und ansonsten mit einem Infrarotlicht absorbierenden Material. Je nach dem wie weit die Gräben mit reflektierendem oder absorbierendem Material gefüllt sind, ergibt sich eine entsprechende Begrenzung des Raumwinkels, aus dem Infrarotstrahlung durch die von den Gräben begrenzten Lichtleiter zu den zugehörigen Sensorelementen gelangen kann. Der Raumwinkel und damit das Teilgesichtsfeld jedes Sensorelements ist dann am kleinsten, wenn die Gräben vollständig mit infrarotlicht absorbierendem Material gefüllt sind. Bei anderen Varianten eines derartigen Temperatursensors sind die Lichtleiter nicht quaderförmig sondern beispielsweise zylinderförmig oder besitzen eine andere geeignete Form. Die Form der Gräben ist entsprechend angepaßt.

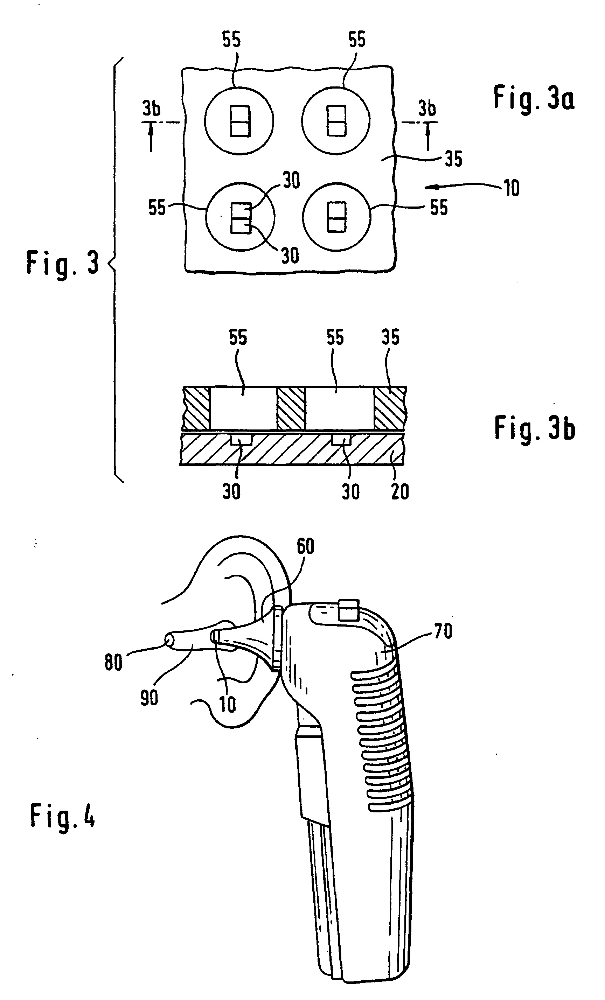

Die Dicke der Schicht 40 ist so gewählt, daß sich die Teilgesichtsfelder benachbarter Sensorelemente nur allenfalls geringfügig überlappen, wobei die Größe der Überlappung auch vom Abstand des Meßobjekts vom Temperatursensor abhängt. Wenn der erfindungsgemäße Temperatursensor beispielsweise am vorderen Ende der Meßspitze 60 eines Ohrthermometers 70 angeordnet ist (Fig. 4), dann ist der Abstand zwischen dem Temperatursensor 10 und dem Trommelfell 80 bzw. Ohrkanal 90 sehr klein, sodaß die Lichtleiter durch eine relativ dünne Schicht gebildet sein können, die die zu messende Infrarot-Strahlung auch entsprechend wenig absorbiert, ohne daß wegen der dann nur geringen Begrenzung des Raumwinkels eine zu große Überlappung der Teilgesichtsfelder zu erwarten ist.

Bei einer Variante eines erfindungsgemäßen Temperatursensors befinden sich unter jedem Lichtleiter mehrere Sensorelemente. Das Gesichtsfeld der erfindungsgemäßen Strahlungssensoren ist daher in einzelne Teilgesichtsfelder aufgelöst, die jeweils einer Gruppe benachbarter Sensorelemente 30 zugeordnet sind. Auf diese Art läßt sich in an sich bekannter Weise die Meßgenauigkeit erhöhen. Besonders vorteilhaft ist ein Strahlungssensor, dessen Sensorarray aus Sensorelementen aufgebaut ist, wie sie in der DE 197 10 946 oder der eingangs gewürdigten EP 0 566 156 B1 beschrieben sind. Bei der Auswertung werden die von den einzelnen Sensorelementen einer Sensorgruppe gelieferten Sensorsignale zuerst zu einem Signal zusammengefaßt, was beispielsweise durch Mittelwertbildung geschehen kann.

Bei einer zweiten Ausführung eines erfindungsgemäßen Temperatursensors ist die Oberfläche der Schicht 40 mit einer Mikrolinsenstruktur versehen, wobei sich unter jeder Mikrolinse 45 ein Sensorelement oder eine Gruppe von Sensorelementen 30 befindet. Vorzugsweise ist die Schicht mit den Mikrolinsen so ausgebildet, daß die Sensorelemente im Brennpunkt der zugehörigen Mikrolinse liegen. Bei diesem Temperatursensor ist die Größe der Überlappung benachbarter Teilgesichtsfelder weitgehend unabhängig vom Abstand zwischen dem Temperatursensor und dem Meßobjekt. Daher kann im Vergleich zu dem oben beschriebenen Ausführungsbeispiel die Schicht 40 sehr dünn ausgebildet sein, und bei einer weiteren Variante eines erfindungsgemäßen Temperatursensors auch auf die Gräben verzichtet werden (Fig. 2).

Bei einer dritten Ausführung eines erfindungsgemäßen Strahlungssensors (Fig. 3) ist über dem Sensorarray eine Lochblende 35 angeordnet, die eine Mehrzahl von Löchern 55 aufweist, wobei sich unter jedem Loch ein Sensorelement oder eine Gruppe von Sensorelementen befindet. Analog zu den oben beschriebenen Gräben kann die Lochblende aus einem Infrarotlicht reflektierenden Material, beispielsweise einem Metallblech, oder einem Infrarotlicht absorbierenden Material bestehen oder aus zwei Schichten, d.h. aus einer absorbierenden und einer reflektierenden Schicht gebildet sein. Die Löcher 55 in der Lochblende bilden eine Mehrzahl von Lichtleitern. Die Lochblende kann auch aus einem beliebigen Material bestehen, wenn die Löcher innen mit einem Material versehen, beispielsweise vergoldet, sind, das die gewünschten reflektierenden oder absorbierenden Eigenschaften für Infrarotlicht besitzt.

Ein erfindungsgemäßes Strahlungsthermometer unterscheidet sich von den bekannten Thermometern vor allem in der Verwendung eines erfindungsgemäßen Strahlungssensors und/oder der Anwendung des erfindungsgemäßen Verfahrens zur Temperaturberechnung. Gemäß Fig. 4 weist das Strahlungsthermometer 70 eine Meßspitze 60 auf, an deren vorderem Ende ein erfindungsgemäßer Strahlungssensor 10 angeordnet ist. Es können dort aber auch mehrere vorzugsweise gegeneinander geneigte Strahlungssensoren vorhanden sein, damit das Strahlungsthermometer ein ausreichend großes Gesichtsfeld besitzt. Ferner enthält es eine Einrichtung zur Bestimmung eines Temperaturmeßwerts, die zur Temperaturbestimmung nur die Temperatursignale des Teils der Sensorelemente verwendet, der einen größeren oder signifikant größeren Temperaturwert liefert als die restlichen Sensorelemente. Ferner kann ein Warnsignal ausgegeben werden, wenn die Anzahl der größeren oder signifikant größeren Temperaturwerte bezogen auf die Gesamtzahl der Temperaturwerte einen bestimmten Schwellwert unterschreitet.

Das erfindungsgemäße Verfahren (Fig. 5) wird am Beispiel eines Strahlungsthermometers beschrieben, dessen Strahlungssensor eine matrixförmige Anordnung einzelner Sensorelemente Eᵢⱼ aufweist, wobei die Indices i,j die Zeile bzw. Spalte bezeichnen, in der sich das jeweilige Sensorelement befindet. Jedes Sensorelement Eᵢⱼ gibt ein Temperatursignal Sᵢⱼ ab, das einem Temperaturwert Tᵢⱼ entspricht.

Beim erfindungsgemäßen Verfahren wird in einem ersten Schritt 101 ein Temperaturschwellwert T_{S} berechnet, indem beispielsweise alle Temperaturwerte Tᵢⱼ gemittelt werden. Danach werden in einem zweiten Schritt 102 die einzelnen Temperaturwerte Tᵢⱼ mit diesem Temperaturschwellwert T_{S} verglichen. Bei einem Infrarot-Ohrthermometer werden nur die Temperaturwerte T'ᵢⱼ, die größer sind als der Temperaturschwellwert T_{S}, weiter verarbeitet. Bei anderen Anwendungsfällen werden nur die kleineren Temperaturwerte weiter verarbeitet.

In einem zusätzlichen Schritt 103 wird für jedes Sensorelement Eᵢⱼ mit einem Temperaturwert T'ᵢⱼ, der größer ist als der Temperaturschwellwert T_{S}, überprüft, ob dessen benachbarte Sensorelemente E_{(i ± 1)j}, E_{i(j ± 1)} und/oder E_{(i ± 1)(j ± 1)} auch Temperaturwerte liefern, die größer als der Temperaturschwellwert T_{S} sind. Nur die Temperaturwerte T'_{ij(E')} der Sensorelemente E'ᵢⱼ, deren benachbarte Sensorelemente ebenfalls Temperaturwerte T'ᵢⱼ liefern, die größer als der Temperaturschwellwert T_{S} sind, werden weiter verarbeitet. Auf diese Weise gehen nur die Temperatursignale der Sensorelemente in die Berechnung eines Temperaturmeßwerts T ein, die von einem zusammenhängenden wärmeren Bereich herrühren, d.h. von denen angenommen werden kann, daß sie die Temperaturwerte des für das Ohrthermometer sichtbaren Bereichs des Trommelfells wiedergeben.

Bei der weiteren Verabeitung wird in einem Schritt 104 ein Temperaturmeßwert T ermittelt, indem die Temperaturwerte T'ᵢⱼ bzw. die Temperaturwerte T'_{ij(E')} gemittelt werden, oder aus den Temperaturwerten T'_{ij(E')} der größte Wert Tₘₐₓ bestimmt wird.

Bei einem modifizierten Verfahren werden im zweiten Schritt nicht einfach die größeren Temperaturwerte T'ᵢⱼ ausgewählt und weiter verarbeitet, sondern nur die Temperaturwerte, die signifikant größer sind als der Temperaturschwellwert T_{S}. Ein signifikant größerer Temperaturwert T'ᵢⱼ liegt beispielsweise dann vor, wenn er eine bestimmte Mindesttemperaturdifferenz oder eine mit empirischen oder statistischen Methoden ermittelte Temperaturdifferenz zum Temperaturschwellwert T_{S} aufweist. Auch der Temperaturschwellwert T_{S} kann mit anderen Methoden als durch Mittelwertbildung aller von den Sensorelementen Eᵢⱼ gelieferten Temperaturwerte Tᵢⱼ festgelegt werden. Beispielsweise kann die Häufigkeitsverteilung der Temperaturwerte bestimmt werden. Wenn im Blickfeld des Mehrfachsensors sowohl Teile des Ohrkanals als auch Teile des Trommelfells liegen, liefern die Sensorelemente nämlich Temperaturwerte, deren Verteilung zwei Häufungspunkte aufweisen kann, von denen der eine die Ohrkanaltemperatur und der andere die Trommelfelltemperatur repräsentiert. Als Temperaturschwellwert T_{S} wird dann der Temperaturwert festgelegt, der dem zwischen den beiden Häufungspunkten liegenden relativen Minimum der Häufigkeitsverteilungskurve entspricht.

Bei der bevorzugten Variante des erfindungsgemäßen Verfahrens wird aus dem Vorhandensein der zwei Häufungspunkte geschlossen, daß die Meßspitze des Thermometers richtig ausgerichtet ist. Sind keine zwei Häufungspunkte erkennbar, wird kein Temperaturmeßwert T bestimmt sondern der Benutzer durch eine entsprechende Anzeige aufgefordert, die Messung zu wiederholen.

Natürlich sind bei einem erfindungsgemäßen Strahlungsthermometer auch andere Verfahren anwendbar, die zur Bestimmung eines Temperaturmeßwerts nur die Temperatursignale der Sensorelemente heranziehen, die im Vergleich zu den restlichen Sensorelementen Infrarotstrahlung aus einem wärmeren/kälteren Bereich detektieren. Als Beispiel sei nur noch ein Gradientenverfahren genannt, das aus den Temperaturwerten Tᵢⱼ aller Sensorelemente die Lage und Richtung von Temperaturgradienten ermittelt und daraus die Lage des wärmsten/kältesten Bereichs im Gesichtsfeld des Strahlungsthermometers.

Das oben aufgezeigte Verfahren mit seinen Varianten kann natürlich bei allen Strahlungsthermometern angewendet werden, die mehrere Sensorelemente aufweisen.

## Patentansprüche

1. Strahlungsthermometer mit mehreren Infrarot-Sensorelementen zur Detektion von Infrarot-Strahlung, die Temperaturwerten entsprechende Temperatursignale abgeben, und mit mehreren optischen Elementen, von denen jedes einem einzelnen oder mehreren Sensorelement(en) zugeordnet ist, und den Raumwinkel begrenzt, aus dem Strahlung auf das/die jeweilige(n) Sensorelement(e) gelangen kann,
**dadurch gekennzeichnet,**
**daß** es eine Einrichtung aufweist, die in einem ersten Schritt anhand der Temperaturwerte (Tᵢⱼ) der Sensorelemente (Eᵢⱼ) feststellen kann, ob sich im Gesichtsfeld des Strahlungsthermometers ein zusammenhängender wärmerer Bereich befindet, und die zur Bestimmung eines Temperaturmeßwerts (T) nur die Temperaturwerte (T'ᵢⱼ) verwenden kann, die aus dem wärmeren Bereich stammen.

2. Strahlungsthermometer nach Anspruch 1,
**dadurch gekennzeichnet,**
**daß** die Infrarot-Sensorelemente (30) auf einem gemeinsamen Substrat (20) integriert sind (Mehrfachsensor).

3. Strahlungsthermometer nach Anspruch 1 oder 2,
**dadurch gekennzeichnet,**
**daß** die optischen Elemente miteinander verbunden sind (Mehrfachoptik).

4. Strahlungsthermometer nach Anspruch 2 oder 3,
**dadurch gekennzeichnet,**
**daß** die optischen Elemente mit dem Mehrfachsensor integriert sind.

5. Strahlungsthermometer nach einem der vorhergehenden Ansprüche,
**dadurch gekennzeichnet,**
**daß** es einen Strahlungssensor (10) aufweist, der die Infrarot-Sensorelemente (30) und die optischen Elemente enthält.

6. Strahlungsthermometer nach einem der vorhergehenden Ansprüche,
**dadurch gekennzeichnet,**
**daß** die optischen Elemente eine Anordnung von Mikrolinsen (45) aufweisen.

7. Strahlungsthermometer nach einem der Ansprüche 1 bis 5,
**dadurch gekennzeichnet,**
**daß** die optischen Elemente aus einer von Gräben (50) durchzogenen Schicht (40) bestehen.

8. Strahlungsthermometer nach Anspruch 7,
**dadurch gekennzeichnet,**
**daß** ein Teil der Schicht (40) eine Mehrzahl von Lichtleitern bildet, von denen jeder seitlich durch Gräben (50) begrenzt ist, wobei die Lichtleiter einzelnen oder mehreren Sensorelementen (30) zugeordnet sind.

9. Strahlungsthermometer nach Anspruch 7 oder 8,
**dadurch gekennzeichnet,**
**daß** die Gräben (50) mit einem Infrarotlicht reflektierenden und/oder einem Infrarotlicht absorbierenden Material gefüllt sind.

10. Strahlungsthermometer nach einem der Ansprüche 1 bis 5,
**dadurch gekennzeichnet,**
**daß** die optischen Elemente aus einer Lochblende (35) mit einer Mehrzahl von Löchern (55) bestehen.

11. Strahlungsthermometer nach Anspruch 10,
**dadurch gekennzeichnet,**
**daß** jedes Loch der Lochblende (35) einem einzelnen oder mehreren Sensorelementen (30) zugeordnet ist.

12. Strahlungsthermometer nach einem der vorhergehenden Ansprüche,
**dadurch gekennzeichnet,**
**daß** es mehrere gegeneinander geneigt angeordnete Sensorelemente oder Strahlungssensoren (10) enthält.

13. Strahlungsthermometer nach einem der vorhergehenden Ansprüche,
**dadurch gekennzeichnet,**
**daß** es eine Meßspitze (60) aufweist, und die Sensorelemente oder der/die Strahlungssensor(en) (10) am vorderen Ende der Meßspitze (60) angeordnet sind.

14. Strahlungsthermometer nach einem der vorhergehenden Ansprüche,
**dadurch gekennzeichnet,**
**daß** es eine Anzeige aufweist, die einem Benutzer anzeigt, daß bei einer Messung kein Temperaturmeßwert (T) ermittelt wurde.

15. Verfahren zur Bestimmung einer Temperatur aus mehreren Temperaturwerten mittels eines Strahlungsthermometers, insbesondere nach einem der vorhergehenden Ansprüche, das mehrere Infrarot-Sensorelemente zur Detektion von Infrarot-Strahlung aufweist, die Temperaturwerten entsprechende Temperatursignale abgeben,
**dadurch gekennzeichnet,**
**daß** in einem ersten Schritt (101) anhand der Temperaturwerte (Tᵢⱼ) festgestellt wird, ob sich im Gesichtsfeld des Strahlungsthermometers ein zusammenhängender wärmerer Bereich befindet, und daß zur Bestimmung eines Temperaturmeßwerts (T) nur die Temperaturwerte (T'ᵢⱼ) verwendet werden, die aus dem wärmeren Bereich stammen.

16. Verfahren nach Anspruch 15, **dadurch gekennzeichnet,**
**daß** zuerst ein Temperaturschwellwert (T_{S}) bestimmt wird, und daß zur Temperaturbestimmung (104) nur die Temperaturwerte (T'ᵢⱼ) verwendet werden, die größer oder signifikant größer als der Temperaturschwellwert (T_{S}) sind (102).

17. Verfahren nach Anspruch 15 oder 16, **dadurch gekennzeichnet,**
**daß** nur die größeren Temperaturwerte (T'_{ij(E')}) von den Sensorelementen (E'ᵢⱼ) zur Bestimmung eines Temperaturmeßwerts (T) herangezogen werden, deren benachbarte Sensorelemente (E_{(i ± 1)j}, E_{i(j±1)} und/oder E_{(i±1)(j±1)}) ebenfalls größere Temperaturwerte (T'_{ij(E')}) liefern, d.h. die Infrarot-Strahlung aus einander benachbarten Raumbereichen detektieren (103).

18. Verfahren nach Anspruch 17, **dadurch gekennzeichnet,**
**daß** der Temperaturmeßwert (T) der größte Temperaturwert (Tₘₐₓ) aller größeren Temperaturwerte (T'_{ij(E')}) benachbarter Sensorelemente (E'ᵢⱼ) ist.

19. Verfahren nach einem der Ansprüche 15 bis 18, **dadurch gekennzeichnet,**
**daß** ein Warnsignal ausgegeben wird, wenn die Anzahl der größeren oder signifikant größeren Temperaturwerte (T'ᵢⱼ) bezogen auf die Gesamtzahl aller Temperaturwerte (Tᵢⱼ) einen bestimmten Schwellwert unterschreitet.

20. Verfahren nach einem der Ansprüche 15 bis 19, **dadurch gekennzeichnet,**
**daß** nur dann ein Temperaturmeßwert (T) bestimmt wird, wenn die Häufigkeitsverteilung der Temperaturwerte (Tᵢⱼ) aller Sensorelemente (Eᵢⱼ) zwei Häufungspunkte aufweist.

21. Verfahren nach Anspruch 20, **dadurch gekennzeichnet,**
**daß** der Temperaturschwellwert (T_{S}) durch das relative Minimum zwischen den zwei Häufungspunkten definiert ist.

22. Verfahren nach Anspruch 15, **dadurch gekennzeichnet,**
**daß** aus den Temperaturwerten (Tᵢⱼ) aller Sensorelemente die Lage und Richtung von Temperaturgradienten ermittelt und daraus die Lage des wärmsten/kältesten Bereichs im Gesichtsfeld des Strahlungsthermometers, und daß zur Bestimmung eines Temperaturmeßwerts (T) nur die Temperaturwerte (Tᵢⱼ) herangezogen werden, die aus dem wärmsten Bereich stammen.

23. Verfahren nach einem der Ansprüche 15 bis 22, **dadurch gekennzeichnet,**
eine Anzeige aktiviert wird, wenn bei einer Messung kein Temperaturmeßwert (T) bestimmt wurde.

## Claims

1. A radiation thermometer comprising a plurality of infrared sensor elements for detecting infrared radiation and producing temperature signals corresponding to temperature values, and a plurality of optical elements each of which is associated with a single or a plurality of sensor element(s) and defines the solid angle from which radiation can impinge on the respective sensor element(s),
**characterized in that** it includes a device which is capable of determining, in a first step, on the basis of the temperature values (Tᵢⱼ) of the sensor elements (Eᵢⱼ) whether a contiguous warmer region is present in the field of view of the radiation thermometer, and which for the determination of a temperature measurement value (T) may only use those temperature values (T'ᵢⱼ) that originate from the warmer region.

2. The radiation thermometer as claimed in claim 1,
**characterized in that** the infrared sensor elements (30) are integrated on a common substrate (20) (multiple sensor).

3. The radiation thermometer as claimed in claim 1 or 2,
**characterized in that** the optical elements are connected with each other (multiple optical system).

4. The radiation thermometer as claimed in claim 2 or 3,
**characterized in that** the optical elements are integrated with the multiple sensor.

5. The radiation thermometer as claimed in any one of the preceding claims,
**characterized in that** it includes a radiation sensor (10) containing the infrared sensor elements (30) and the optical elements.

6. The radiation thermometer as claimed in any one of the preceding claims,
**characterized in that** the optical elements include an arrangement of microlenses (45).

7. The radiation thermometer as claimed in any one of the claims 1 to 5,
**characterized in that** the optical elements are comprised of a layer (40) through which grooves (50) extend.

8. The radiation thermometer as claimed in claim 7,
**characterized in that** part of the layer (40) forms a plurality of optical waveguides each of which has its sides bounded by grooves (50), said optical waveguides being associated with single or a plurality of sensor elements (30).

9. The radiation thermometer as claimed in claim 7 or 8,
**characterized in that** the grooves (50) are filled with an infrared-reflecting and/or an infrared-absorbing material.

10. The radiation thermometer as claimed in any one of the claims 1 to 5,
**characterized in that** the optical elements are comprised of an apertured diaphragm (35) having a plurality of apertures (55).

11. The radiation thermometer as claimed in claim 10,
**characterized in that** each aperture of the diaphragm (35) is associated with a single or a plurality of sensor element(s) (30).

12. The radiation thermometer as claimed in any one of the preceding claims,
**characterized in that** it includes a plurality of sensor elements or radiation sensors (10) arranged at relative inclinations.

13. The radiation thermometer as claimed in any one of the preceding claims,
**characterized in that** it includes a probe head (60), and the sensor elements or the radiation sensor(s) (10) is/are arranged at the forward end of said probe head (60).

14. The radiation thermometer as claimed in any one of the preceding claims,
**characterized in that** it includes an indicator signaling a user that no temperature measurement value (T) was determined during a measurement.

15. A method for determining a temperature from several temperature values by means of a radiation thermometer, especially according to any one of the preceding claims, which includes a plurality of infrared sensor elements for the detection of infrared radiation which produce temperature signals corresponding to temperature values,
**characterized by** a first step (101) comprising determining, on the basis of the temperature values (Tᵢⱼ), whether a contiguous warmer region is present in the field of view of the radiation thermometer, and using for the determination of a temperature measurement value (T) only those temperature values (T'ᵢⱼ) that originate from the warmer region.

16. The method as claimed in claim 15,
**characterized by** the step of first determining a temperature threshold value (T_{S}), and using for temperature determination (104) only the temperature values (T'ᵢⱼ) that are higher or significantly higher than the temperature threshold value (T_{S}) (102).

17. The method as claimed in claim 15 or 16,
**characterized by** the step of using, for determination of a temperature measurement value (T), only the higher temperature values (T'_{ij(E')}) of those sensor elements (E'ᵢⱼ) whose adjacent sensor elements (E_{(i±1)j}, E_{i(j±1)} and/or E_{(i±1)(j±1)}) deliver likewise higher temperature values (T'_{ij(E')}), that is, detect infrared radiation from adjacent regions (103).

18. The method as claimed in claim 17,
**characterized in that** the temperature measurement value (T) is the highest temperature value (Tₘₐₓ) of all higher temperature values (T'_{ij(E')}) of adjacent sensor elements (E'ᵢⱼ).

19. The method as claimed in any one of the claims 15 to 18,
**characterized in that** a warning signal is issued when the number of higher or significantly higher temperature values (T'ᵢⱼ), related to the aggregate of all temperature values (Tᵢⱼ), drops below a predetermined threshold value.

20. The method as claimed in any one of the claims 15 to 19,
**characterized by** the step of determining a temperature measurement value (T) only when the frequency distribution of the temperature values (Tᵢⱼ) of all sensor elements (Eᵢⱼ) exhibits two cluster points.

21. The method as claimed in claim 20,
**characterized in that** the temperature threshold value (T_{S}) is defined by the relative minimum between the two cluster points.

22. The method as claimed in claim 15,
**characterized by** the step of determining, from the temperature values (Tᵢⱼ) of all sensor elements, the position and direction of temperature gradients, deriving therefrom the position of the warmest region in the field of view of the radiation thermometer, and using for determination of a temperature measurement value (T) only those temperature values (Tᵢⱼ) that originate from the warmest region.

23. The method as claimed in any one of the claims 15 to 22,
**characterized by** the step of activating an indicator when no temperature measurement value (T) was determined during a measurement.

## Revendications

1. Thermomètre à rayonnement comportant plusieurs éléments de détection d'infrarouges pour la détection de rayonnement infrarouge qui émettent des signaux de température correspondant aux valeurs de température, et plusieurs éléments optiques dont chacun est associé à un ou plusieurs éléments de détection et limite l'angle solide à partir duquel le rayonnement peut parvenir sur l'élément(les éléments) de détection respectif(s),
**caractérisé en ce que**
il présente un dispositif qui peut, dans une première étape, sur la base des valeurs de température (Tᵢⱼ) des éléments de détection (Eᵢⱼ), constater si une zone plus chaude concernée se trouve dans le champ de vision du thermomètre à rayonnement et peut utiliser pour la détermination d'une valeur de mesure de température (T) seulement les valeurs de température (T'ᵢⱼ) qui proviennent de la zone plus chaude.

2. Thermomètre à rayonnement selon la revendication 1,
**caractérisé en ce que**
les éléments de détection d'infrarouges (30) sont intégrés sur un substrat commun (20) (détecteur multiple).

3. Thermomètre à rayonnement selon la revendication 1 ou 2,
**caractérisé en ce que**
les éléments optiques sont reliés les uns aux autres (optique multiple).

4. Thermomètre à rayonnement selon la revendication 2 ou 3,
**caractérisé en ce que**
les éléments optiques sont intégrés avec le détecteur multiple.

5. Thermomètre à rayonnement selon l'une quelconque des revendications précédentes,
**caractérisé en ce que**
il présente un détecteur de rayonnement (10) qui contient les éléments de détection d'infrarouges (30) et les éléments optiques.

6. Thermomètre à rayonnement selon l'une quelconque des revendications précédentes,
**caractérisé en ce que**
les éléments optiques présentent un agencement de microlentilles (45).

7. Thermomètre à rayonnement selon l'une quelconque des revendications 1 à 5,
**caractérisé en ce que**
les éléments optiques consistent en une couche (40) traversée par des tranchées (50).

8. Thermomètre à rayonnement selon la revendication 7,
**caractérisé en ce que**
une partie de la couche (40) constitue une pluralité de conducteurs lumineux dont chacun est limité latéralement par des tranchées (50), les conducteurs lumineux étant associés à des éléments de détection (30) isolés ou multiples.

9. Thermomètre à rayonnement selon la revendication 7 ou 8,
**caractérisé en ce que**
les tranchées (50) sont remplies d'une matière réfléchissant la lumière infrarouge et/ou d'une lumière absorbant la lumière infrarouge.

10. Thermomètre à rayonnement selon l'une quelconque des revendications 1 à 5,
**caractérisé en ce que**
les éléments optiques consistent en un diaphragme perforé (35) comportant une pluralité de trous (55) .

11. Thermomètre à rayonnement selon la revendication 10,
**caractérisé en ce que**
chaque trou du diaphragme perforé (35) est associé à un ou plusieurs éléments de détection (30).

12. Thermomètre à rayonnement selon l'une quelconque des revendications précédentes,
**caractérisé en ce que**
il comporte plusieurs éléments de détection ou détecteurs de rayonnement (10) disposés en biais les uns par rapport aux autres.

13. Thermomètre à rayonnement selon l'une quelconque des revendications précédentes,
**caractérisé en ce que**
il présente une pointe de sonde (60) et que les éléments de détection ou le(s) détecteur(s) de rayonnement (10) sont disposés à l'extrémité avant de la pointe de sonde (60).

14. Thermomètre à rayonnement selon l'une quelconque des revendications précédentes,
**caractérisé en ce que**
il présente un affichage qui indique à un utilisateur qu'aucune valeur de mesure de température (T) n'a été déterminée lors d'un relevé.

15. Procédé de détermination d'une température à partir de plusieurs valeurs de température au moyen d'un thermomètre à rayonnement, notamment selon l'une quelconque des revendications précédentes, qui présente plusieurs éléments de détection d'infrarouges pour la détection de rayonnement infrarouge, qui émettent des signaux de température correspondant aux valeurs de température,
**caractérisé en ce que**
dans une première étape (101), sur la base des valeurs de température (Tᵢⱼ), il est déterminé si une zone concernée plus chaude se trouve dans le champ de détection du thermomètre à rayonnement et que, pour la détermination d'une valeur de mesure de température (T), seules les valeurs de température (T'ᵢⱼ) qui proviennent de la zone plus chaude sont utilisées.

16. Procédé selon la revendication 15,
**caractérisé en ce que**
il est d'abord déterminé une valeur seuil de température (Tₛ) et, que pour la détermination de la température (104), seules les valeurs de température (T'ᵢⱼ) qui sont supérieures ou significativement supérieures à la valeur seuil de température (Tₛ) sont utilisées (102).

17. Procédé selon la revendication 15 ou 16,
**caractérisé en ce que**
on ne fait intervenir, pour la détermination d'une valeur de mesure de température (T) que les valeurs de température supérieures (T'_{ij(E')}) des éléments de détection (E'ᵢⱼ) dont les éléments de détection voisins (E_{(i±1)j}, E_{i(j±1)} et/ou E_{(i±1)(j±1)}) donnent également des valeurs de température supérieures (T'_{ij(E')}), c'est-à-dire détectent le rayonnement infrarouge provenant de zones spatiales voisines (103).

18. Procédé selon la revendication 17,
**caractérisé en ce que**
la valeur de mesure de température (T) est la valeur de température la plus grande (Tₘₐₓ) de toutes les valeurs de température supérieures (T'_{ij(E')}) des éléments de détection voisins (E'ᵢⱼ).

19. Procédé selon l'une quelconque des revendications 15 à 18,
**caractérisé en ce que**
un signal d'alarme est émis si le nombre des valeurs de température (T'ᵢⱼ) supérieures ou significativement supérieures par rapport au nombre total de toutes les valeurs de température (Tᵢⱼ) n'atteint pas une certaine valeur seuil.

20. Procédé selon l'une quelconque des revendications 15 à 19,
**caractérisé en ce que**
une valeur de mesure de température (T) n'est déterminée que lorsque la répartition de fréquence des valeurs de température (Tᵢⱼ) de tous les éléments de détection (Eᵢⱼ) présente deux points d'accumulation.

21. Procédé selon la revendication 20,
**caractérisé en ce que**
la valeur seuil de température (T_{S}) est définie par le minimum relatif entre les deux points d'accumulation.

22. Procédé selon la revendication 15,
**caractérisé en ce que**
à partir des valeurs de température (Tᵢⱼ) de tous les éléments de détection, la position et la direction des gradients de température est déterminée et en partant de là la position de la zone la plus chaude/la plus froide dans le champ de vision du thermomètre à rayonnement, et que, pour définir une valeur de mesure de température (T), on ne fait intervenir que les valeurs de température (Tᵢⱼ) qui proviennent de la zone la plus chaude.

23. Procédé selon l'une quelconque des revendications 15 à 22,
**caractérisé en ce que**
un affichage est activé lorsqu'aucune valeur de mesure de température (T) n'a été déterminée lors d'un relevé.
